# EUROPÄISCHE PATENTSCHRIFT

(11) **EP 2 544 849 B1**
(45) Veröffentlichungstag und Bekanntmachung des Hinweises auf die Patenterteilung: **11.02.2015**
(21) Anmeldenummer: 11709637.0
(22) Anmeldetag: 10.03.2011
(51) Int. Cl.: B23K 26/04

(54) **LASERBEARBEITUNGSKOPF UND VERFAHREN ZUR BEARBEITUNG EINES WERKSTÜCKS MITTELS EINES LASERSTRAHLS**
LASER MACHNING HEAD UND METHOD OF MACHINING A WORKPIECE USING A LASER BEAM
TÊTE DE TRAVAIL AU LASER ET PROCÉDÉ DE TRAVAIL AU LASER

(30) Priorität: 12.03.2010 DE 102010011253
(43) Veröffentlichungstag der Anmeldung: 16.01.2013
(73) Patentinhaber: Precitec GmbH & CO. KG, 76571 Gaggenau-Bad Rotenfels (DE)
(72) Erfinder: SCHÜRMANN, Bert, 76593 Gernsbach (DE)
(74) Vertreter: Ter Meer Steinmeister & Partner
(86) Internationale Anmeldenummer: PCT/EP2011/001196
(87) Internationale Veröffentlichungsnummer: WO 2011/110357

(56) Entgegenhaltungen:
- EP-A2- 0 770 445
- WO-A1-2007/088122
- DE-A1- 19 852 302
- DE-A1-102007 027 377
- US-A- 4 667 082

## Beschreibung

Die Erfindung betrifft einen Laserbearbeitungskopf sowie ein Verfahren zur Bearbeitung eines Werkstücks mittels eines Laserstrahls, insbesondere zum Fügen mittels Schweißen oder Löten.

Mit Hilfe eines Laserbearbeitungskopfes lässt sich ein Werkstück unter Verwendung eines Laserstrahls bearbeiten, wobei zum Beispiel Schweiß- oder Lötarbeiten zum Fügen eines Spaltes in einem Werkstück oder zwischen zwei Werkstücken durchgeführt werden können. Hierbei muss der Laserstrahl den zu fügenden Spalt, also die Stoßfuge der zu schweißenden Fügepartner treffen. Hierzu werden Nahtverfolgungssysteme eingesetzt, welche beispielsweise auf Triangulationssensoren basieren.

Bei diesen Systemen wird während eines Schweißvorgangs eine Lichtschnittvorrichtung eingesetzt, welche an einem Laserbearbeitungskopf angebracht ist. Hierbei projiziert die Lichtschnittvorrichtung einen Lichtfächer mittels eines Laserstrahls auf das Werkstück, um darauf eine Lichtlinie zu erzeugen. Bei diesem Verfahren wird die Position der Nahtfuge im Vorlauf messtechnisch bestimmt. Um zu prüfen, ob tatsächlich eine Schweißung stattgefunden hat und die Schweißnaht an der korrekten Stelle liegt, wird die im Vorlauf bestimmte Position der Nahtfuge mit der Schweißnahtlage, die mit einer zweiten Kamera unter Zuhilfenahme einer zweiten Lichtlinie bestimmt wird, verglichen. Die zweite Lichtlinie läuft hierbei der Fügestelle, also dem Auftreffpunkt des Laserstrahls auf das Werkstück nach. Ein solches System ist beispielsweise in der EP 0 770 445 A2 beschrieben.

Bei diesem Verfahren wird die zweite Lichtlinie zur messtechnischen Erfassung der Schweißnaht einige Millimeter hinter dem Tool-Center-Point (TCP) also dem Laserauftreffpunkt auf das Werkstück angeordnet. Dadurch entstehen insbesondere bei kurvenähnlichen Schweißnahtverläufen Ausschwenkbewegungen, wodurch die minimalen Kurvenradien durch den Abstand der vorlaufenden und nachlaufenden Lichtlinie begrenzt werden, da die Sichtfelder der Kameras, die die Lichtlinie detektieren, ebenfalls begrenzt sind. Je nach Kurvenverlauf beziehungsweise Abstand der Lichtlinien sind die Ausschwenkbewegungen der vorlaufenden und nachlaufenden Lichtlinie unterschiedlich, können also nicht mit einer Schwenkachse bewältigt werden.

Aus der DE 10 2006 049 627 A1 ist ein Verfahren und eine Vorrichtung zur Feinpositionierung eines Werkzeugs mit einer Handhabungseinrichtung bekannt. Bei diesem Verfahren wird ein in Bewegungsrichtung vor einem Bearbeitungspunkt zu erkennender Spalt bei einem Stumpfstoß von zwei zu verschweißenden Werkstücken für die Erfassung einer Soll-Bewegungsbahn ausgewertet, wobei hierfür eine Graubildauswertung von den im Auflicht aufgenommenen Bildern einer Kamera für die Erfassung der Konturposition vorgenommen wird. Die Handhabungseinrichtung fährt dann die zu verfolgenden Konturen innerhalb des Messbereichs eines Sensors, welcher die Ist-Bewegung des Laserauftreffpunkts auf das Werkstück bestimmt, ab, wobei durch einen zwischen Handhabungseinrichtung und Laserbearbeitungskopf geschalteten Aktor zur Feinpositionierung der Laserstrahlauftreffpunkt entsprechend verändert wird, um Abweichungen in der Soll-Bewegungsbahn der Handhabungseinrichtung auszugleichen.

Die EP 0 707 920 B1 beschreibt einen kompakten Laserbearbeitungskopf zur Lasermaterialbearbeitung mit integrierter On-Line-Bahnkontrolle. Bei diesem Laserbearbeitungskopf werden Bahn-Ist-Daten einer CNC-Steuerung zur Realisierung der Geometrieerfassung und/oder der Konturverfolgung übergeben um gleichzeitig einer Verarbeitungseinheit zugeführt. Die Verarbeitungseinheit vergleicht die Bahn-Ist-Daten mit Bahn-Soll-Daten aus einem Protokollspeicher, wobei die Bahn-Soll-Daten mit Hilfe eines Masterteils zuvor ermittelt worden sind. Mit Hilfe der Verarbeitungseinheit wird bei vorgebbarer Abweichung ein Fehlersignal an eine Anlagensteuerung generiert, wenn die Bahn-Ist-Daten von den Bahn-Soll-Daten über das vorgegebene Maß abweichen. Zur Erreichung einer vollen 3D-Fähigkeit ist ein Sensor zur Geometrieerfassung und/oder Konturverfolgung um mindestens 360° drehbar gelagert.

Aus der DE 10 2006 004 919 A1 ist ein Laserstrahlschweißkopf bekannt, welcher zum Schweißen von Metallteilen mit mindestens einem Strahlengang für einen Schweißgang und Mitteln zur optischen Erfassung der Position der Schweißnaht an einer ersten Messposition ausgestattet ist. Die Mittel zur optischen Erfassung der Schweißnaht ermöglichen eine Anordnung der ersten Messposition in Schweißrichtung vorlaufend vor der Schweißpositon des Schweißstrahls und erzeugen in Abhängigkeit von einer lateralen Abweichung der Schweißnaht von einer Sollposition ein Korrektursignal zur Korrektur der Schweißposition des Schweißstrahls. Der Abstand der ersten Messposition vorlaufend zur Schweißposition des Schweißstrahls ist so gewählt, dass das erzeugte Korrektursignal unmittelbar, insbesondere ohne Vorlaufberechnung durch Ansteuerung von Mitteln zur Korrektur der Schweißposition des Schweißstrahls verwendbar ist.

Aus der DE 198 52 302 A1 ist ein Laserstrahlschweißkopf mit den Merkmalen des Oberbegriffs des Anspruchs 1 bekannt, wobei eine Vermessung der Werkstücksgeometrie vor des Schweißstelle und eine Vermessung des Schweißbades erfolgt.

Der Erfindung liegt die Aufgabe zugrunde, einen Laserbearbeitungskopf sowie ein Verfahren zur Bearbeitung eines Werkstücks mittels eines Laserstrahls zu schaffen, bei welchen Stoßfugen mit kleinen Krümmungsradien von zu schweißenden oder zu lötenden Fügepartnern in einfacher Weise gefügt und überwacht werden können.

Diese Aufgabe wird durch den Laserbearbeitungskopf nach Anspruch 1 sowie durch das Verfahren zur Bearbeitung eines Werkstücks mittels eines Laserstrahls gemäß Anspruch 14 gelöst. Vorteilhafte Ausgestaltungen und Weiterbildungen der Erfindung werden in den Unteransprüchen dargelegt.

Erfindungsgemäß ist ein Laserbearbeitungskopf zur Bearbeitung eines Werkstücks mittels eines Laserstrahls vorgesehen, mit einem Gehäuse, durch das ein Strahlengang für den Laserstrahl hindurchgeführt ist und das eine Fokussieroptik zum Fokussieren des Laserstrahls auf eine Fügestelle des zu bearbeitenden Werkstücks aufweist, einer am Gehäuse angebrachten Lichtschnittvorrichtung mit einer Lichtquelle zum Erzeugen einer Lichtlinie auf dem Werkstück, die eine zu fügende Stelle in einem vorbestimmten Abstand schneidet, einer Kamera mit einem in einem Beobachtungsstrahlengang vor der Kamera angeordneten optischen Bandpassfilter, wobei die Lichtquelle ein zumindest lokales Abstrahlmaximum im Wellenlängendurchlassbereich des Bandpassfilters aufweist und der optische Bandpassfilter so ausgestaltet ist, dass der Laserstrahl nicht transmittiert wird, und wobei die Kamera die Lichtlinie an der zu fügenden Stelle sowie den durch den Bandpassfilter durchgelassenen Anteil des Prozesslichts eines durch Auftreffen des Laserstrahls auf das zu bearbeitende Werkstück erzeugten Schweißbades an der Fügestelle in regelmäßigen Zeitabständen abbildet, und einer Verarbeitungseinheit mit einem Speicher zum Empfangen der aufgenommenen Bilddaten von der Kamera, welche dazu ausgebildet ist, durch Bildverarbeitung der empfangenen Bilddaten den Kreuzungspunkt der Lichtlinie mit der zu fügenden Stelle sowie den Mittelpunkt des Schweißbades an der Fügestelle zu bestimmen, die Kreuzungspunkte zwischen Lichtlinie und zu fügender Stelle als Zieltrajektorie im Speicher abzuspeichern, und einen minimalen Abstand zwischen der gespeicherten Zieltrajektorie und dem aktuellen Schweißbadmittelpunkt zu bestimmen.

Es ist also ein Laserbearbeitungskopf zum Fügen durch Schweißen oder Löten vorgesehen, bei welchem eine zu fügende Stelle mittels vorlaufender Laserlichtlinie dadurch erkannt wird, dass mittels einer Kamera aufgenommene Unregelmäßigkeiten in der Lichtlinie, welche bei einem Kreuzen der Lichtlinie mit der zu fügenden Stelle, also mit der Stoßfuge auftreten, ausgewertet werden. Die zu unterschiedlichen Zeitpunkten erkannten Kreuzungspunkte zwischen Lichtlinie und zu fügender Stelle werden dann in einem Speicher als Zieltrajektorie abgelegt. Mittels der gleichen Kamera wird das durch den auf das Werkstück treffenden Laserstrahl erzeugte Schweißbad oder Keyhole beobachtet und der Mittelpunkt des Keyholes durch Bildverarbeitung berechnet.

Für eine reale Umsetzung des optischen Bandpassfilters ist dieser zweckmäßigerweise ein Interferenzfilter, insbesondere ein Fabry-Perot-Filter, wobei die Halbwertsbreite des Wellenlängendurchlassbereichs vorzugsweise kleiner als 50 nm, besonders bevorzugt kleiner als 20 nm, und insbesondere kleiner 10 nm ist.

Bei einer Bearbeitung des Werkstücks, insbesondere beim Schweißen, wird also mittels des Laserbearbeitungskopfes eine Zieltrajektorie ermittelt, welche als Soll-Bahn dient, auf die das nachlaufende Keyhole mittels eines Aktuators eingeregelt wird. Die Soll-Bahn dient andererseits dazu, die Aktorik dahingehend zu überprüfen, ob diese den Schweißpunkt innerhalb eines vorbestimmten Bereichs um die Soll-Bahn führt. Bei einem Ausfall der Aktorik kann somit eine Fehlermeldung ausgegeben werden, wenn das Keyhole nicht mehr auf der vorgegebenen Zieltrajektorie entlang läuft.

Erfindungsgemäß ist hierbei besonders vorteilhaft, dass die emittierte Strahlung des Schweißbads durch die Kamera aufgenommen und ausgewertet wird, um den Mittelpunkt des aktuellen Schweißpunktes zu ermitteln, ohne dass auf die reflektierte Laserstrahlung zurückgegriffen wird. Somit kann also die Position des Schweißbades, welches die Schweißnaht erzeugt, bestimmt und entsprechend einer Zieltrajektorie geführt werden. Eine Überprüfung der erzeugten Schweißnaht durch eine nachlaufende Laserlinie entfällt somit, wodurch enge Bahnradien ermöglicht werden können.

Zur Überprüfung der richtigen Lage der zu erzeugenden Schweißnaht entlang einer Stoßfuge ist es zweckmäßig, wenn der erfindungsgemäße Laserbearbeitungskopf ferner einen Vergleicher aufweist, welcher dazu ausgebildet ist, bei Überschreiten des minimalen Abstands zwischen Zieltrajektorie und aktuellem Schweißmittelpunkt über einen vorgegebenen Distanzwert eine Fehlermeldung auszugeben.

Für die optimale Führung der zu erzeugenden Schweißnaht entlang einer zu verschweißenden oder zu verlötenden Stoßfuge ist es von Vorteil, wenn der erfindungsgemäße Laserbearbeitungskopf ferner einen Aktuator aufweist, welcher dazu ausgebildet ist, den minimalen Abstand zwischen Zieltrajektorie und aktuellem Schweißmittelpunkt durch Bewegen des Laserstrahls quer zu einer Bewegungsrichtung des Laserbearbeitungskopfes um eine Regeldistanz (a) auf einen minimalen Wert, also auf Null hin zu regeln.

Hierbei ist es zweckmäßig wenn der Aktuator dazu ausgebildet ist, den Laserstrahl senkrecht zur Bewegungsrichtung um die Regeldistanz (a) zu bewegen.

Für eine einfache und genaue Positionierung des Laserstrahls relativ zum Gehäuse des Laserbearbeitungskopfes ist es zweckmäßig, wenn der Aktuator dazu ausgebildet ist, zur Verstellung des Laserstrahls quer zur Bewegungsrichtung des Laserbearbeitungskopfes eine optische Komponente, insbesondere einen Umlenkspiegel, innerhalb des Gehäuses des Laserbearbeitungskopfes zu bewegen.

Beim Abspeichern der ermittelten Kreuzungspunkte zur Ermittlung einer Zieltrajektorie ist es von Vorteil, wenn die Verarbeitungseinheit dazu ausgebildet ist, die Koordinaten der Kreuzungspunkte zwischen Lichtlinie und zu fügender Stelle sowie der Schweißbadmittelpunkte aus dem bewegten Bezugssystem der abbildenden Kamera in ein Bezugssystem in der Ebene des Werkstücks zu transformieren, wobei die Zieltrajektorie der Kreuzungspunkte in dem Bezugssystem des Werkstücks im Speicher abgelegt wird.

Für die gleichzeitige Aufnahme sowohl der Lichtlinie mit geringer Lichtintensität als auch des Schweißbades in dem Werkstück, welches eine hohe Lichtintensität aufweist, ist es besonders von Vorteil, wenn die Kamera eine Bildaufnahmevorrichtung umfasst, welche zur Verarbeitung der Bilddaten mittels eines HDR-Verfahrens ausgebildet ist. Hierbei ist es sinnvoll vor der Kamera einen Filter anzuordnen, welcher für den Wellenlängenbereich der erzeugten Lichtlinie sowie der Prozessstrahlung des Schweißbades im Wesentlichen durchlässig ist, jedoch für die Wellenlänge des auf das Werkstück projizierten Arbeitslaserstrahls im Wesentlichen nicht durchlässig ist.

Für eine optimale Ausrichtung des von der Kamera erzeugten Kamerabildes mit dem auf das Werkstück treffenden Laserstrahl ist es besonders zweckmäßig, wenn ferner ein Strahlteiler in dem Gehäuse des Laserbearbeitungskopfes vorgesehen ist, durch welchen ein Beobachtungsstrahlengang der Kamera koaxial in den Laserstrahlengang einkoppelbar ist.

Es ist jedoch auch möglich, dass die Kamera an einer Außenseite des Gehäuses angebracht ist.

Um in einfacher Weise einen Abstand zwischen der Fokussieroptik und dem Werkstück mittels Triangulation ermitteln zu können, ist es zweckmäßig, wenn die Lichtschnittvorrichtung dazu ausgebildet ist, mittels der Lichtquelle einen Lichtfächer zu erzeugen, welcher schräg zur optischen Achse des Laserstrahls auf das zu bearbeitende Werkstück trifft, sodass eine Lichtlinie auf das Werkstück erzeugt wird.

Bei einer geradlinigen Bewegung des Laserbearbeitungskopfes entlang des Werkstücks ist es von Vorteil, wenn die auf das Werkstück projizierte Lichtlinie gerade ist und senkrecht zur Bewegungsrichtung des Laserbearbeitungskopfes verläuft.

Für das Ermitteln der Zieltrajektorie bei einer krümmungsreichen Stoßfuge und bei einer Anpassung der Bewegungsrichtung des Laserbearbeitungskopfes entsprechend dem Verlauf der Stoßfuge ist es von Vorteil, wenn die auf das Werkstück projizierte Lichtlinie kreisförmig um den Auftreffpunkt des Laserstrahls verläuft.

Aufgrund der hohen Intensität und der geringen Strahlaufweitung von Laserlicht ist es von Vorteil wenn die Lichtquelle ein Laser, insbesondere ein Halbleiterlaser ist.

Erfindungsgemäß ist weiter eine Robotervorrichtung vorgesehen, welche einen erfindungsgemäßen Laserbearbeitungskopf, wie er oben beschrieben ist, aufweist, wobei diese dazu ausgebildet ist, den Laserbearbeitungskopf so zu bewegen, dass der Schweißmittelpunkt entlang der Zieltrajektorie geführt wird, wobei die aktuelle Bewegungsrichtung des auf das Werkstück treffenden Laserstahls so eingestellt wird, dass diese tangential zu der Zieltrajektorie von dem aktuellen Schweißmittelpunkt wegzeigt. Somit kann also die Bewegungsrichtung des Laserbearbeitungskopfes beziehungsweise des Laserstrahls in optimaler Weise an den Verlauf der zu fügenden Stoßfuge angepasst werden.

Erfindungsgemäß ist weiter ein Verfahren zur Bearbeitung eines Werkstücks mittels des erfindungsgemäßen Laserbearbeitungskopfes vorgesehen, welches folgende Schritte aufweist: Erzeugen einer Lichtlinie innerhalb eines Arbeitsbereichs des Werkstücks, welche eine zu fügende Stelle in einem vorbestimmten Abstand schneidet, Abbilden der Lichtlinie an der zu fügenden Stelle und eines durch das Auftreffen des Laserstrahls auf das Werkstück erzeugten Schweißbades an der Fügestelle in regelmäßigen Zeitabständen mittels der Kamera, und Verarbeiten der von der Kamera erzeugten Bilddaten, mit den Schritten: Bestimmen eines Kreuzungspunktes der Lichtlinie mit der zu fügenden Stelle sowie des Mittelpunktes des Schweißbadbereiches, Abspeichern der zu unterschiedlichen Zeitpunkten ermittelten Kreuzungspunkte als Zieltrajektorie in einem Speicher, und Ermitteln eines minimalen Abstands zwischen Zieltrajektorie und aktuellem Schweißbadmittelpunkt. Zweckmäßigerweise umfasst das erfindungsgemäße Verfahren den Schritt des Regelns des minimalen Abstands zwischen Zieltrajektorie und aktuellem Schweißbadmittelpunkt durch Bewegen des Laserstrahls quer zur Bewegungsrichtung des Laserstrahls um eine Regeldistanz (a) auf einen minimalen Wert.

Die Erfindung wird anhand der Zeichnungen näher erläutert. Es zeigen:
Figur 1 eine stark vereinfachte schematische Ansicht eines Laserbearbeitungskopfes gemäß einem Ausführungsbeispiel der Erfindung,
Figur 2A eine stark vereinfachte perspektivische Teilansicht des Werkstücks während eines Fügeprozesses zu einem ersten Zeitpunkt,
Figur 2B eine stark vereinfachte perspektivische Teilansicht des Werkstücks während eines Fügeprozesses zu einem zweiten Zeitpunkt,
Figur 3A eine stark vereinfachte Draufsicht des Werkstücks während eines Fügeprozesses unter Verwendung einer geraden Lichtlinie, welche auf das Werkstück projiziert wird,
Figur 3B eine stark vereinfachte Draufsicht des Werkstücks während des Fügeprozesses unter Verwendung einer kreisförmigen Lichtlinie, welche auf das Werkstück projiziert wird, und
Figur 4 ein Blockschaltbild einer Verarbeitungseinheit des Laserbearbeitungskopfes gemäß der Erfindung.

In den verschiedenen Figuren der Zeichnungen sind einander entsprechende Bauelemente mit gleichen Bezugszeichen versehen.

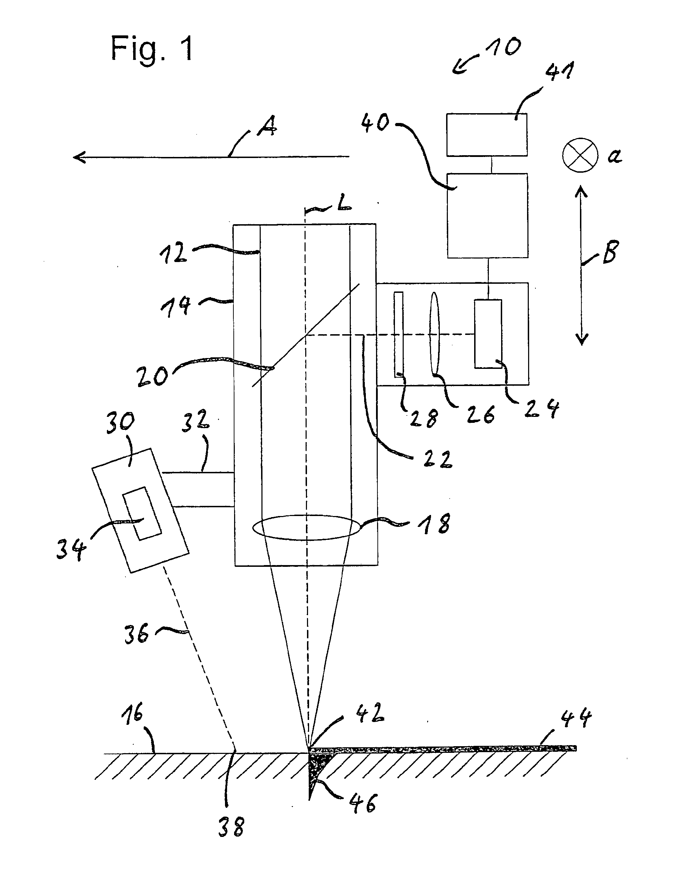

In Figur 1 ist eine stark vereinfachte Ansicht eines Laserbearbeitungskopfes 10, insbesondere eines Laserbearbeitungskopfes, gemäß einem Ausführungsbeispiel der Erfindung gezeigt, wie er mit Laserbearbeitungsmaschinen oder -anlagen verwendet wird. Hierbei wird ein von der Laserbearbeitungsmaschine kommender Arbeitslaserstrahl 12 durch ein Gehäuse 14 des Laserbearbeitungskopfes 10 hindurch auf ein Werkstück 16 gelenkt und mittels einer Fokussieroptik 18 auf das Werkstück 16 fokussiert, wie durch die optische Achse L angedeutet wird. Der Arbeitslaserstrahl 12 kann bei einer Zuführung zu dem Laserbearbeitungskopf 10 mittels einer Lichtleitfaser aufgrund der Auskopplung des Laserstrahls aus der Lichtleitfaser durch eine Kolimatoroptik aufgeweitet sein.

In dem Gehäuse 14 des Laserbearbeitungskopfes 10 ist im Durchgangsbereich des Arbeitslaserstrahls 12 ein Strahlteiler 20 so angeordnet, dass ein Beobachtungsstrahlengang 22 (angedeutet durch seine optische Achse) einer Kamera 24 koaxial in den Strahlengang des Arbeitslaserstrahls 12 eingekoppelt wird. Im Beobachtungsstrahlengang 22 ist vor der Kamera 24 eine Abbildungsoptik 26 sowie ein optischer Bandpassfilter 28 angeordnet. In dem in Figur 1 gezeigten Ausführungsbeispiel der Erfindung ist der Beobachtungsstrahlengang 22 der Kamera 24 über den Strahlteiler 20 auf einen Arbeitsbereich des Werkstücks 16 gerichtet. Es ist jedoch auch möglich die Kamera 24 mit einer Beobachtungsoptik an einer Außenseite des Gehäuses 14 des Laserbearbeitungskopfes 10 anzubringen, wobei jedoch sichergestellt werden muss, dass das von der Kamera 24 aufgenommene Bild des Arbeitsbereichs des Werkstücks 16 bei einer Bewegung des Laserbearbeitungskopfes 10 mit dem Gehäuse 14 und insbesondere mit der Fokussieroptik 18 synchron mitbewegt wird.

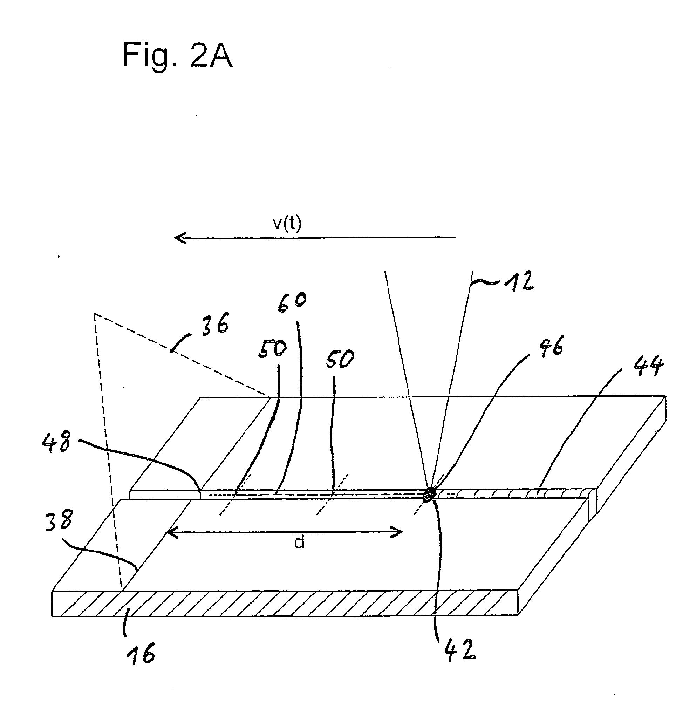

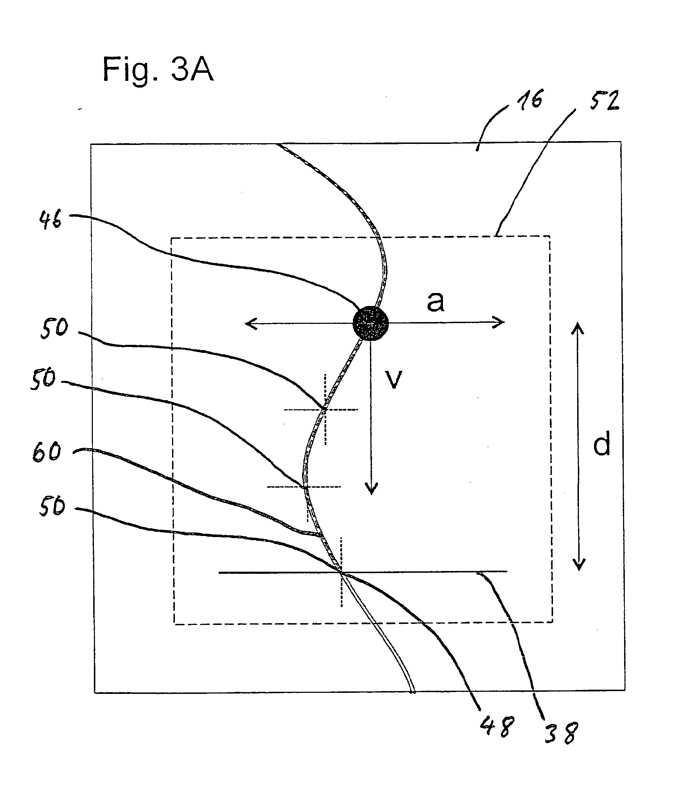

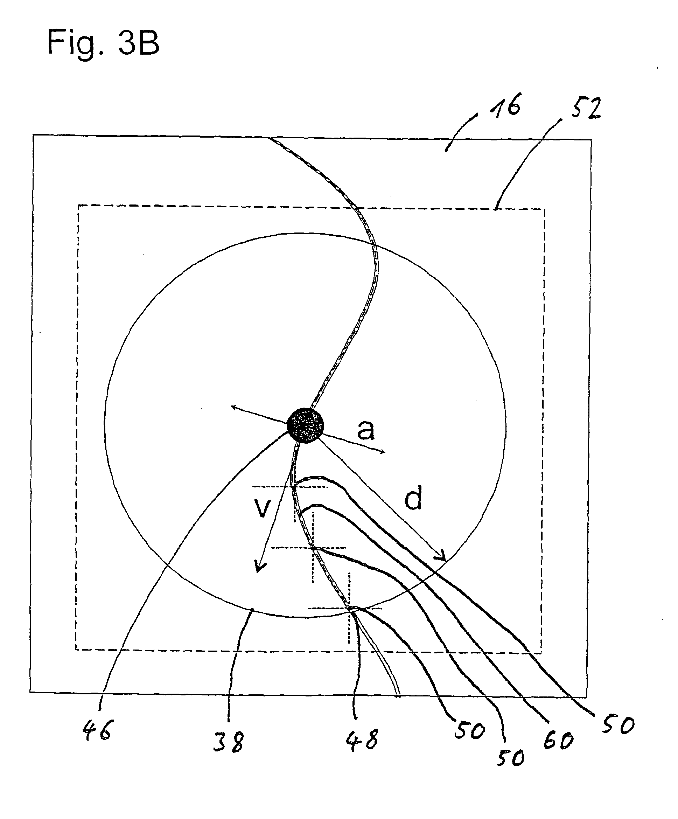

An einer Außenseite des Gehäuses 14 ist eine Lichtschnittvorrichtung 30 angeordnet, welche mittels einer Halterung 32 an einer Seite des Gehäuses 14 montiert ist, die bei einer Bewegung des Laserbearbeitungskopfes 10 in dessen Bewegungsrichtung (angedeutet durch den Pfeil A) vorne befindlich ist. Die Lichtschnittvorrichtung 30 weist eine Lichtquelle 34 auf, durch welche ein Lichtfächer 36 in Richtung des Werkstücks 16 geworfen wird, um auf dessen Oberfläche innerhalb des Arbeitsbereiches des Laserbearbeitungskopfes 10 eine Lichtlinie 38 (gezeigt in Figuren 2A, 3A und 3B) zu erzeugen.

Als Lichtquelle 34 der Lichtschnittvorrichtung 30 eignet sich aufgrund der hohen Intensität und einer geringen intrinsischen Strahlaufweitung eine Laserlichtquelle, wobei diese eine Halbleiterlaserdiode sein kann. Hierfür können beispielsweise Al-GaInP-Laserdioden mit Multi-Quantum-Well-Strukturen verwendet werden, welche ein Abstrahlmaximum in einem Wellenlängenbereicht zwischen 635 nm und 670 nm aufweisen. So kann beispielsweise eine Laserdiode mit einer Abstrahlwellenlänge von 658 nm und einer Abstrahlleistung von 66 mW eingesetzt werden.

Vor der Kamera 24, welche vorzugsweise eine CCD-Kamera mit logarithmischer Kennlinie ist, ist der optische Bandpassfilter 28 angeordnet. Erfindungsgemäß ist dabei der Wellenlängendurchlassbereich des optischen Bandpassfilters 28 auf das zumindest lokale Abstrahlmaximum der Lichtquelle der Lichtschnittvorrichtung 30 angepasst. Hierbei ist die Halbwertsbreite oder FWHM (full width at half maximum) des Wellenlängendurchlassbereiches des Filters 28 so zu wählen, dass gleichzeitig das Maximum der Lichtquelle 30 sowie ein spektraler Anteil des Prozesslichts, das von dem im folgenden noch ausführlich beschriebenen Schweißbad im Werkstück 16 emittiert wird, mit ausreichender Intensität innerhalb des spektralen Durchlassbereiches des optischen Bandpassfilters 28 liegen, wobei sichergestellt ist, dass die Wellenlänge des Arbeitslaserstrahls 12 außerhalb des spektralen Durchlassbereichs des Bandpassfilters 28 liegt. Hierbei ist die Halbwertsbreite vorzugsweise kleiner 50 nm, besonders bevorzugt kleiner 20 nm und insbesondere kleiner 10 nm. Der optische Bandpassfilter 28 ist vorzugsweise ein Fabry-Perot-Filter oder Fabry-Perot-Etalon, wobei durch diese Art von Filter elektromagnetische Wellen eines bestimmten Frequenzbereichs durchgelassen werden und die restlichen Frequenzanteile durch Interferenz ausgelöscht werden. Hinsichtlich der Halbwertsbreite des optischen Bandpassfilters 28 ist es von Vorteil, wenn dieser Bereich so schmal wie möglich ist, um bei einem Betrieb des Laserbearbeitungskopfes 10 eine möglichst geringe Störung des Kamerabildes durch Reflexe des Laserstrahls 12 zu erzeugen.

Der Laserbearbeitungskopf 10 umfasst ferner eine mit der Kamera 24 verbundene Verarbeitungseinheit 40, sowie einen mit der Verarbeitungseinheit 40 verbundenen Aktuator 41 deren Funktion im Folgenden noch genauer beschrieben werden wird.

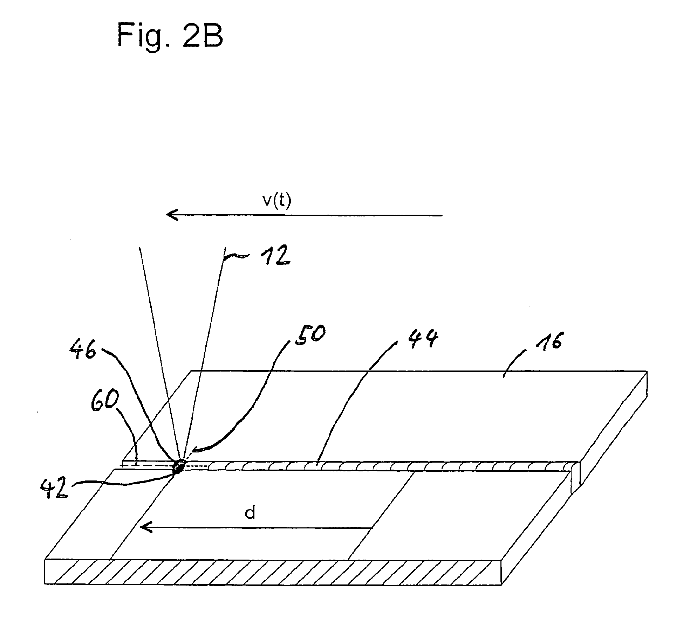

Obwohl die Lichtschnittvorrichtung 30, wie in den Figuren 2A, 2B und 3A gezeigt, eine gerade Lichtlinie 38 auf das Werkstück 16 projiziert, welche im Wesentlichen senkrecht auf der Bewegungsrichtung des Laserbearbeitungskopfes 10 steht, ist es beispielsweise auch vorstellbar, dass die Lichtschnittvorrichtung 30 einen kegelförmigen Lichtfächer um den Fokuspunkt des Laserstrahls 12 auf das Werkstück 16 projiziert, um eine kreisförmige oder elliptische Lichtlinie 38 zu erzeugen, wie in Figur 3B gezeigt.

Im Folgenden soll nun die Funktion des erfindungsgemäßen Laserbearbeitungskopfes 10 anhand der Figuren 2A, 2B, 3A und 3B erläutert werden.

Bei einem durch den Laserbearbeitungskopf 10 durchgeführten Fügeprozess, welcher ein Schweiß- oder Lötprozess sein kann, wird der Laserbearbeitungskopf 10, wie durch den in Figur 1 angedeuteten Pfeil A gezeigt, mit einer Geschwindigkeit v(t) über das zu fügende Werkstück 16 (welches aus zwei miteinander zu verbindenden Blechen oder ähnlichen Elementen bestehen kann) bewegt, wobei der fokussierte Laserstrahl 12 auf eine jeweilige Fügestelle 42 trifft und aufgrund des Schweißvorgangs eine Fügenaht 44, welche die in Figur 2A gezeigten Werkstückteile miteinander verbindet, erzeugt.

Bei dem Auftreffen des fokussierten Laserstrahls 12 auf die Fügestelle 42 wird das Material des Werkstücks 16 in beiden zu fügenden Teilen aufgeschmolzen, wodurch an der Fügestelle 42 ein Schweißbad 46 erzeugt wird, welches üblicherweise auch als Keyhole bezeichnet wird. Das Schweißbad 46 emittiert aufgrund des aufgeschmolzenen Materials des Werkstücks 16, welches üblicherweise Metall ist, eine thermische Strahlung entsprechend der Temperatur des erzeugten Schweißbads 46.

Die Lichtlinie 38 der Lichtschnittvorrichtung 30 wird so auf das Werkstück 16 projiziert, dass es dem Fokuspunkt des Laserstrahls 12, also der jeweiligen Fügestelle 42 vorausläuft. Die Lichtschnittvorrichtung 30 ist dabei so an dem Gehäuse 14 des Laserbearbeitungskopfes 10 angebracht, dass der Lichtfächer 36 schräg zur optischen Achse des Laserstrahls 12 auf das zu bearbeitende Werkstück 16 trifft, sodass sich bei einer Auf- und Abbewegung des Gehäuses 14 entlang der optischen Achse L (siehe Pfeil B) die projizierte Lichtlinie 38 auf dem Werkstück 16 relativ zu dem auf das Werkstück 16 treffenden Arbeitslaserstrahl 12 hin- und herbewegt.

Somit vergrößert sich ein Abstand d zwischen der Lichtlinie 38 und dem Auftreffpunkt des Laserstrahls 12 (welcher nicht dem realen Auftreffpunkt des Laserstrahls 12 entsprechen muss, sondern auch ein virtueller festgelegter Punkt in dem Bild-Koordinatensystem der fest zu der Lichtschnittvorrichtung 30 angeordneten Kamera 24 sein kann), wenn der Laserbearbeitungskopf 10 nach unten bewegt wird und es verkleinert sich der Abstand d zwischen der Lichtlinie 38 und dem Auftreffpunkt des Laserstrahls 12 auf das Werkstück 16, wenn der Laserbearbeitungskopf 10 nach oben bewegt wird.

Da für einen optimalen Fügeprozess der Fokus des Arbeitslaserstrahls 12 immer an einer vorbestimmten Höhe entlang der zu fügenden Stelle verlaufen soll, wird mittels der Verarbeitungseinheit 40 die von der Kamera erfasste Lichtlinie 38 hinsichtlich ihres Abstandes d zum Auftreffpunkt des Laserstrahls 12 ausgewertet und durch Steuerung des Aktuators 41 für eine Auf- oder Abbewegung des Gehäuses 14 (siehe Pfeil B) auf einen vorbestimmten Abstand d geregelt, welcher wiederum einer optimalen Fokuslage des Arbeitslaserstrahls 12 an der Fügestelle 42 entspricht. Dieser Regelungsmechanismus ist in gleicher Weise anwendbar für einen kegelförmigen Lichtfächer, welcher eine kreisförmige Lichtlinie 38 auf dem Werkstück 16 erzeugt, wie in Figur 3B gezeigt.

Bei einem erfindungsgemäßen Laserbearbeitungsvorgang wird mittels der Kamera 24 sowohl die auf das Werkstück projizierte Lichtlinie 38 als auch das durch Auftreffen des Laserstrahls 12 auf das Werkstück 16 erzeugte Schweißbad 46 aufgrund der emittierten thermischen Strahlung in regelmäßigen Zeitabständen aufgenommen. Die Kamera 24 ist bevorzugter Weise dazu ausgebildet, Bildaufnahmen mit einer hohen Dynamik hinsichtlich der aufgenommenen Lichtintensität zu verarbeiten. Für diesen Zweck eignen sich Kameravorrichtungen, welche HDR (High Dynamic Range)-Verfahren einsetzen, besonders gut.

Darüber hinaus kann die Kamera 24 eine logarithmische Kennlinie aufweisen, sodass das lichtstarke Prozesslicht, welches durch den optischen Bandpassfilter 28 durchgelassen wird, gleichzeitig mit der relativ zu dem Prozesslicht des Schweißbades 46 lichtschwachen Lichtlinie 38 von der Kamera 24 aufgenommen werden kann. Da der optische Bandpassfilter 28 Licht nur innerhalb eines kleinen Wellenlängenbereichs durchlässt und den Wellenlängenbereich des Arbeitslaserstrahls 12 ausblendet, kann mittels des erfindungsgemäßen Laserbearbeitungskopfes 10 ohne Störung von Reflexen des Laserstrahls 12 oder anderen störenden Einflüssen der Umriss des Schweißbades 46 sowie die Kontur der Lichtlinie 38 erfasst werden.

In Figur 2A ist ein Schweißprozess zu einem ersten Zeitpunkt gezeigt. Die Lichtlinie 38 verläuft über das Werkstück 16 und geht über die Stoßfuge oder den verbleibenden Spalt zwischen den Werkstückteilen hinweg, wobei die Lichtlinie 38 an dem Ort, an welchem die Stoßfuge verläuft, die zu fügende Stelle 48 kreuzt. Durch Verarbeitung der von der Kamera 24 aufgenommenen Bilddaten mittels der Verarbeitungseinheit 40 wird ein Kreuzungspunkt 50 zwischen zu fügender Stelle 48 und der Lichtlinie 38 ermittelt. Hierbei wird der Verlauf der Lichtlinie 38 über das in der Regel ebenflächige Werkstück 16 analysiert und der Kreuzungspunkt 50 als der Punkt lokalisiert, bei welchem die Lichtlinie 38 einen Sprung oder ähnlich vergleichbare Unregelmäßigkeiten zeigt.

Ferner wird das durch den Bandpassfilter 28 transmittierte Prozesslicht des Schweißbades 46 und somit die Kontur des Schweißbades 46 abgebildet, wobei durch Bildverarbeitung in der Verarbeitungseinheit 40 der Mittelpunkt des Schweißbades 46 an der Fügestelle 42 bestimmt wird. Der Umriss des Schweißbades 46 kann einerseits als kreisförmig genähert werden, es ist jedoch andererseits auch möglich, den geometrischen Flächenschwerpunkt der abgebildeten Schweißbadfläche zu bestimmen.

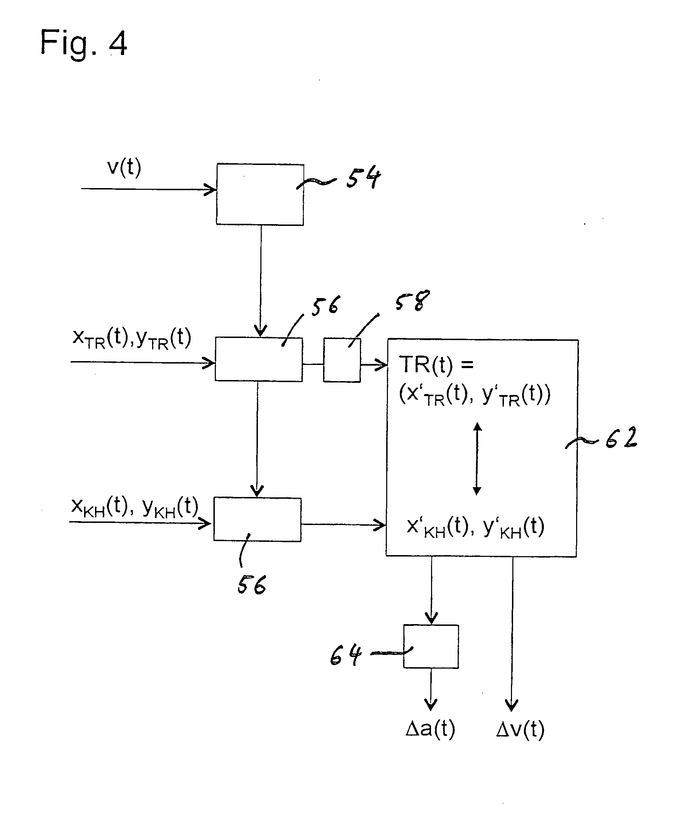

Die von der Verarbeitungseinheit 40 ermittelten Kreuzungspunkte 50 liegen zu einem bestimmten Zeitpunkt zunächst in den Koordinaten der von der Kamera 24 aufgenommenen Bildfläche 52 (Figur 3A und B) vor. Durch zeitliche Integration der Vorschubgeschwindigkeit v(t) des Laserbearbeitungskopfes 10 wird zunächst ein Translationsvektor zu einem bestimmten Zeitpunkt errechnet und zusätzlich die Orientierung der Bildaufnahmefläche 52 zu dem Werkstück 16 ermittelt, wodurch die Koordinaten der Kreuzungspunkte 50 in ein zu dem Werkstück 16 festes Koordinatensystem transformiert werden können. Für diese Transformation weist die Verarbeitungseinheit 40, wie in Figur 4 gezeigt ist, Mittel 54 zum Bestimmen der Lage und Orientierung des bewegten Bezugssystems der abbildenden Kamera und Mittel 56 zur Transformation der Koordinaten _{TR}(t), y_{TR}(t) der Kreuzungspunkte 50 beziehungsweise der Koordinaten x_{KH}(t), y_{KH}(t) der Schweißbadmittelpunkte des Schweißbads 46 aus dem bewegten Bezugssystem der abbildenden Kamera in ein Bezugssystem in der Ebene der Werkstückoberfläche, wobei die Koordinaten x'_{TR}(t), y'_{TR}(t) der Kreuzungspunkte 50 und x'_{KH}(t), y'_{KH}(t) der Schweißbadmittelpunkte erzeugt werden.

Nach der Transformation der Kreuzungspunkte 50 in ein zu dem Werkstück 16 festes Bezugssystem werden die Kreuzungspunkte 50 in einem Speicher 58 (Figur 4) abgelegt, wodurch durch Interpolation der Kreuzungspunkte 50 eine Zieltrajektorie 60 gebildet wird. Diese Zieltrajektorie 60 bildet eine virtuelle Sollbahn für den nachlaufenden Auftreffpunkt auf das Werkstück 16 des Laserstrahls 12, also den Tool-Center-Point oder TCP. Die Zieltrajektorie 60 entsteht, abhängig von der Rechenleistung der Verarbeitungseinheit 40, etwas hinter der Lichtlinie 38.

Erfindungsgemäß wird die Entstehung einer qualitativ hochwertigen Fügenaht 44 dadurch überprüft oder eine gleichbleibende Qualität durch Regelung dadurch sichergestellt, dass die Lage des aktuellen Schweißbadmittelpunkts 46 mit der Lage der Zieltrajektorie 60 verglichen wird, wie im Folgenden erläutert werden soll.

In den Figuren 2A und 2B ist der einfachste Fall einer zu fügenden Stoßnut oder eines Spaltes bei einem Werkstück 16 gezeigt. Die Vorschubbewegung v(t) des Laserbearbeitungskopfes 10 und somit des Laserstrahls 12 entläuft gerade entlang einer geradlinigen Fuge und erzeugt eine geradlinige Schweißnaht 44. Nach Durchlaufen des Regelabstands d (gezeigt in Fig. 2B) zwischen Lichtlinie 38 und Auftreffpunkt des Laserstrahls 12 hat der Laserstrahl 12 die in Figur 2A gezeigte zu fügende Stelle 48 erreicht, welche mit einem virtuellen Kreuzungspunkt 50 versehen und im Speicher 58 abgelegt wurde. Durch Vergleich der gespeicherten Koordinaten der Kreuzungspunkte 50 im Bezugssystem des Werkstücks 16 des Kreuzungspunktes 50 der Zieltrajektorie 60 mit den Koordinaten des aktuellen Schweißbadmittelpunktes 46 kann überprüft werden, ob das Schweißbad 46 entlang der Zieltrajektorie 60 fehlerfrei geführt wird. Es ist jedoch auch möglich, durch Einsetzen eines Aktuators, beispielsweise des Aktuators 41, welcher den Laserstrahl 12 quer zur Bewegungsrichtung um einen Regelabstand a auslenkt, das Schweißbad 46 auf die Zieltrajektorie 60 einzuregeln.

In Figur 3A ist ein erstes Ausführungsbeispiel für einen Laserbearbeitungsvorgang erfindungsgemäß dargestellt.

Bei diesem Vorgang erfolgt eine gerade Bewegung mit einer Vorschubgeschwindigkeit v des Laserbearbeitungskopfes 10, wobei der Aktuator 41 dazu ausgebildet ist, entweder den gesamten Laserbearbeitungskopf 10 (mit der Lichtschnittvorrichtung 30) oder den Auftreffpunkt des Laserstrahls 12 auf das Werkstück 16 um eine Regeldistanz a hin und her zu bewegen. Die Auslenkbewegung des Laserstrahls 12 mit der Regeldistanz a verläuft hierbei quer zur Bewegungsrichtung des Laserbearbeitungskopfes 10, wobei die Auslenkbewegung vorzugsweise senkrecht zur Bewegungsrichtung des Laserbearbeitungskopfes 10 ist, um eine möglichst einfache Regelung zu erreichen. Die auf das Werkstück 16 projizierte Laserlinie 38 läuft dem Auftreffpunkt des Laserstrahls 12 in einem Abstand d voraus und liegt vorzugsweise senkrecht auf der Bewegungsrichtung v(t) des Laserbearbeitungskopfes 10.

Der Aktuator 41 kann eine übliche mechanische Verstellvorrichtung sein, welche entweder den gesamten Laserbearbeitungskopf 10 bewegt, es ist jedoch auch möglich, den Aktuator 41 zur Verstellung des Laserstrahls 12 an eine optische Komponente zu koppeln, welche in dem Strahlengang des Laserstrahls 12 in dem Laserbearbeitungskopf 10 eingebaut ist. Hierfür eignet sich insbesondere ein Umlenkspiegel (nicht gezeigt), durch welchen der Laserstrahl ohne Verstellung von massereichen Komponenten einfach und schnell relativ zum Werkstück 26 bewegt werden kann. Falls der Laserstrahl 12 relativ zur Lichtschnittvorrichtung 30, welche fest an dem Gehäuse 14 montiert ist, bewegt wird, sollte dies bei der Berechnung der Zieltrajektorie 60 berücksichtigt werden.

Hierfür wird, wie in Figur 4 gezeigt, eine Berechnungseinheit 62 der Verarbeitungseinheit 40 eingesetzt, welche einen minimalen Abstand zwischen der gespeicherten Zieltrajektorie 60 und einem aktuellen Schweißbadmittelpunkt bestimmt. Bei einem Regelungsvorgang kann der minimale Abstand als Ist-Größe verwendet werden, deren Wert minimiert werden soll. Es ist jedoch auch möglich, einen Vergleicher 64 (Figur 4) in der Verarbeitungseinheit 40 vorzusehen, welcher bei Überschreiten des minimalen Abstands zwischen Zieltrajektorie 60 und aktuellen Schweißmittelpunkt über einen vorgegebenen Distanzwert eine Fehlermeldung ausgibt.

Ein weiteres Ausführungsbeispiel für einen erfindungsgemäßen Laserbearbeitungsvorgang unter Verwendung des zugehörigen erfindungsgemäßen Laserbearbeitungskopfes 10 ist in Figur 3B gezeigt.

Bei diesem Ausführungsbeispiel wird statt einer geradlinigen Laserlinie 38 eine Laserlinie 38 verwendet, welche kreis- oder ellipsenförmig um den Auftreffpunkt des Laserstrahls 12, also um den Mittelpunkt des Schweißbades 46 verläuft. Diese Geometrie der Laserlinie 38 (welche beispielsweise auch halbkreisförmig ausgebildet sein kann) hat den Vorteil, dass bei Schweißbahnen mit extremer Krümmung der Kreuzungspunkt 50 zwischen Laserlinie 38 und zu fügender Stelle 48 stets erfasst werden kann und der Abstand zwischen aktuell erfasster zu fügender Stelle 48 und dem Mittelpunkt des Schweißbades 46 immer etwa den Regelabstand d aufweist.

Diese Form der Laserlinie eignet sich besonders für einer erfindungsgemäße Variante zur Regelung der Bewegung des Laserbearbeitungskopfes 10, die darin besteht, neben der Auslenkung a zum Führen des Schweißbades 48 auf der Zieltrajektorie 60 durch eine Regelung ferner die Bewegungsrichtung mit der Vorschubgeschwindigkeit v an die erfasste Zieltrajektorie 60 anzupassen. Hierbei kann beispielsweise erfindungsgemäß die aktuelle Bewegungsrichtung des auf das Werkstück treffenden Laserstrahls 12 so eingestellt werden, dass diese tangential zu der Zieltrajektorie 60 von dem aktuellen Schweißmittelpunkt wegzeigt. Es wird also bei der Bewegung des Laserbearbeitungskopfes 10 an dem Punkt, an welchem der Mittelpunkt des Schweißbades 46 liegt und welcher bei einer geeigneten Regelung mit der Zieltrajektorie 60 zusammenfällt, eine Tangente an die Zieltrajektorie 60 angelegt, wobei diese Tangente die Richtung für die aktuelle Bewegungsrichtung v(t) des Laserbearbeitungskopfes 10 vorgibt.

In einer weiteren Variante der Steuerung der Bewegungsrichtung des Laserbearbeitungskopfes 10 wird zwischen dem aktuellen Schweißmittelpunkt und dem aktuell erfassten Kreuzungspunkt 50 eine Verbindungsgerade gebildet, welche die aktuelle Bewegungsrichtung des Laserbearbeitungskopfes 10 vorgibt. Das Bilden der Gerade zwischen Schweißmittelpunkt und Kreuzungspunkt 50 ist jedoch nicht auf den aktuell erfassten Kreuzungspunkt 50 beschränkt, es ist beispielsweise möglich, einen Kreuzungspunkt 50 in einem vorgegebenen radialen Abstand von dem Schweißbadmittelpunkt auszuwählen. Darüber hinaus ist das Verfahren der Steuerung der Bewegungsrichtung des Laserbearbeitungskopfes 10 nicht auf die Verwendung einer kreis- oder ellipsenförmigen Laserlinie 38 beschränkt, es ist beispielsweise auch möglich, eine Steuerung der Bewegungsrichtung bei einer geraden Laserlinie 38 vorzunehmen, wie sie in Figur 3A gezeigt ist.

Zum Führen des Laserbearbeitungskopfes kann eine Robotervorrichtung (nicht gezeigt) vorgesehen werden, welche den erfindungsgemäßen Laserbearbeitungskopf 10 entlang der Zieltrajektorie 60 führt.

Durch den erfindungsgemäßen Laserbearbeitungskopf 10 und das erfindungsgemäße Verfahren zur Bearbeitung eines Werkstücks 16 mittels des erfindungsgemäßen Laserbearbeitungskopfes 10 können kleinere Ausschwenkbewegungen aufgrund des kleineren Abstandes zwischen Positionsbestimmung der Stoßfuge, also der zu fügenden Stelle 48, und der Nahtlagebestimmung im Tool-Center-Point, also der Lage des Schweißbades 46, insbesondere die Lage des Mittelpunktes des Schweißbades 46, also des Schweißbadmittelpunktes, verwirklicht werden. Darüber hinaus können die Ausschwenkbewegungen der Lichtlinie 38 im Vorlauf mit einer Achse erfolgen, eine zweite Schwenkachse wird dadurch nicht mehr erforderlich. Somit können kleinere Kurvenradien geschweißt und überwacht werden. Darüber hinaus kann durch die messtechnische Erfassung der Prozessstrahlung des Schweißbades 46, also des Keyholes, beispielsweise in Form von Grauwerten, auf die Laserstrahlleistung zurückgeschlossen werden.

## Patentansprüche

1. Laserbearbeitungskopf (10) zur Bearbeitung eines Werkstücks (16) mittels eines Laserstrahls (12), mit:
- einem Gehäuse (14), durch das ein Strahlengang für den Laserstrahl (12) hindurchgeführt ist und das eine Fokussieroptik (18) zum Fokussieren des Laserstrahls (12) auf eine Fügestelle (42) des zu bearbeitenden Werkstücks (16) aufweist,
- einer am Gehäuse (14) angebrachten Lichtschnittvorrichtung (30) mit einer Lichtquelle (34) zum Erzeugen einer Lichtlinie (38) auf dem Werkstück (16), die eine zu fügende Stelle (48) in einem vorbestimmten Abstand (d) von der Fügestelle (42) schneidet,
- einer Kamera (24) mit einem in einem Beobachtungsstrahlengang (22) vor der Kamera (24) angeordneten optischen Bandpassfilter (28), wobei die Lichtquelle (34) ein zumindest lokales Abstrahlmaximum im Wellenlängendurchlassbereich des Bandpassfilters (28) aufweist und der optische Bandpassfilter (28) so ausgestaltet ist, dass der Laserstrahl (12) nicht transmittiert wird, und wobei die Kamera (24) die Lichtlinie (38) an der zu fügenden Stelle (48) sowie den durch den Bandpassfilter (28) durchgelassenen Anteil des Prozesslichts eines durch Auftreffen des Laserstrahls (12) auf das zu bearbeitende Werkstück (16) erzeugten Schweißbades (46) an der Fügestelle (42) in regelmäßigen Zeitabständen abbildet, und
- einer Verarbeitungseinheit (40) mit einem Speicher (58) zum Empfangen der aufgenommenen Bilddaten von der Kamera (24), die dazu ausgebildet ist,
-- durch Bildverarbeitung der empfangenen Bilddaten den Kreuzungspunkt (50) der Lichtlinie (38) mit der zu fügenden Stelle (48) zu bestimmen,
-- die Kreuzungspunkte (50) zwischen Lichtlinie (38) und zu fügender Stelle (48) als Zieltrajektorie (60) im Speicher (58) abzuspeichern, und
**dadurch gekennzeichnet, dass** die Verarbeitungseinheit dazu ausgebildet ist, durch Bildverarbeitung den Mittelpunkt des Schweißbades (46) an der Fügestelle (42) zu bestimmen, und
-- einen minimalen Abstand zwischen der gespeicherten Zieltrajektorie (60) und dem aktuellen Schweißbadmittelpunkt zu bestimmen.

2. Laserbearbeitungskopf (10) nach Anspruch 1, **dadurch gekennzeichnet, dass** der optische Bandpassfilter (28) ein Interferenzfilter, insbesondere ein Fabry-Perot-Filter ist.

3. Laserbearbeitungskopf (10) nach Anspruch 1 oder 2, **dadurch gekennzeichnet, dass** der optische Bandpassfilter (28) einen Wellenlängendurchlassbereich aufweist, dessen Halbwertsbreite vorzugsweise kleiner 50 nm, besonders bevorzugt kleiner als 20 nm, und insbesondere kleiner 10 nm ist.

4. Laserbearbeitungskopf (10) nach einem der vorstehenden Ansprüche ferner, mit:
- einem Vergleicher (64), welcher dazu ausgebildet ist, bei Überschreiten des minimalen Abstands zwischen Zieltrajektorie (60) und aktuellem Schweißmittelpunkt über einen vorgegebenen Distanzwert eine Fehlermeldung auszugeben.

5. Laserbearbeitungskopf (10) nach einem der vorstehenden Ansprüche, ferner mit:
- einem Aktuator (41), welcher dazu ausgebildet ist, den minimalen Abstand zwischen Zieltrajektorie (60) und aktuellem Schweißmittelpunkt durch Bewegen des Laserstrahls (12) quer zu einer Bewegungsrichtung des Laserbearbeitungskopfes (10) um eine Regeldistanz (a) auf Null hin zu regeln.

6. Laserbearbeitungskopf (10) nach Anspruch 5, **dadurch gekennzeichnet, dass** der Aktuator (41) dazu ausgebildet ist, den Laserstrahl (12) senkrecht zur Bewegungsrichtung um die Regeldistanz (a) zu bewegen.

7. Laserbearbeitungskopf (10) nach einem der vorstehenden Ansprüche, **dadurch gekennzeichnet, dass** die Kamera (24) eine Bildaufnahmevorrichtung umfasst, welche zur Verarbeitung der Bilddaten mittels eines HDR-Verfahrens ausgebildet ist.

8. Laserbearbeitungskopf (10) nach einem der vorstehenden Ansprüche, ferner mit einem Strahlteiler (20), durch welchen ein Beobachtungsstrahlengang (22) der Kamera (24) koaxial in den Laserstrahlengang einkoppelbar ist.

9. Laserbearbeitungskopf (10) nach einem der vorstehenden Ansprüche, **dadurch gekennzeichnet, dass** die Lichtschnittvorrichtung (30) dazu ausgebildet ist, mittels der Lichtquelle (34) einen Lichtfächer (36) zu erzeugen, welcher schräg zur optischen Achse (L) des Laserstrahls (12) auf das zu bearbeitende Werkstück (16) trifft, sodass eine Lichtlinie (38) auf dem Werkstück (16) erzeugt wird und ein Abstand zwischen der Fokussieroptik (18) und dem Werkstück (16) mittels Triangulation ermittelt werden kann.

10. Laserbearbeitungskopf (10) nach Anspruch 9, **dadurch gekennzeichnet, dass** die auf das Werkstück (16) projizierte Lichtlinie (38) gerade ist und senkrecht zur Bewegungsrichtung des Laserbearbeitungskopfes (10) verläuft.

11. Laserbearbeitungskopf (10) nach Anspruch 9, **dadurch gekennzeichnet, dass** die auf das Werkstück (16) projizierte Lichtlinie (38) kreisförmig um den Auftreffpunkt des Laserstrahls (12) auf das Werkstück (16) verläuft.

12. Laserbearbeitungskopf (10) nach einem der vorstehenden Ansprüche, **dadurch gekennzeichnet, dass** die Lichtquelle (34) ein Laser, insbesondere ein Halbleiterlaser ist.

13. Robotervorrichtung mit einem Laserbearbeitungskopf (10) nach einem der vorstehenden Ansprüche, welche dazu ausgebildet ist, den Laserbearbeitungskopf (10) so zu bewegen, dass der Schweißmittelpunkt entlang der Zieltrajektorie (60) geführt wird, wobei die aktuelle Bewegungsrichtung des auf das Werkstück (16) treffenden Laserstrahls (12) so eingestellt wird, dass diese tangential zu der Zieltrajektorie (60) von dem aktuellen Schweißmittelpunkt wegzeigt.

14. Verfahren zur Bearbeitung eines Werkstücks (16) mittels eines Laserbearbeitungskopfes (10) nach einem der vorstehenden Ansprüche durch einen Laserstrahl (12), mit den Schritten:
- Erzeugen einer Lichtlinie (38) auf dem Werkstücks (16), welche eine zu fügende Stelle (48) in einem vorbestimmten Abstand (d) vor einer Fügestelle (42) schneidet,
- Abbilden der Lichtlinie (38) an der zu fügenden Stelle (48) und eines durch das Auftreffen des Laserstrahls (12) auf das Werkstück (16) erzeugten Schweißbades (46) an der Fügestelle (42) in regelmäßigen Zeitabständen mittels der Kamera (24), und
- Verarbeiten der von der Kamera (24) erzeugten Bilddaten, mit den Schritten
-- Bestimmen eines Kreuzungspunktes (50) der Lichtlinie (38) mit der zu fügenden Stelle (48) sowie des Mittelpunktes des Schweißbads (46),
-- Abspeichern der zu unterschiedlichen Zeitpunkten ermittelten Kreuzungspunkte (50) als Zieltrajektorie (60) in einem Speicher (58), und
-- Ermitteln eines minimalen Abstands zwischen Zieltrajektorie (60) und aktuellem Schweißbadmittelpunkt.

15. Verfahren nach Anspruch 14, ferner mit dem Schritt des Regelns des minimalen Abstands zwischen Zieltrajektorie (60) und aktuellem Schweißbadmittelpunkt durch Bewegen des Laserstrahls (12) quer zur Bewegungsrichtung des Laserstrahls (12) um eine Regeldistanz (a) auf Null hin.

## Claims

1. A laser processing head (10) for processing a workpiece (16) by means of a laser beam (12), comprising:
- a housing (14) through which a beam path for the laser beam (12) is guided, and which has a focusing optics (18) for focusing the laser beam (12) onto a joint (42) of the workpiece (16) to be processed,
- a light cutting device (30) fitted on the housing (14) having a light source (34) for generating on the workpiece (16) a light line (38) which cuts a location (48) to be joined at a predetermined distance (d) from the joint (42),
- a camera (24) with an optical bandpass filter (28) arranged in an observation beam path (22) in front of the camera (24), the light source (34) having an at least local emission maximum in the wavelength passband of the bandpass filter (28), and the optical bandpass filter (28) being configured so that the laser beam (12) is not transmitted, and the camera (24) imaging the light line (38) at the location (48) to be joined as well as the portion transmitted by the bandpass filter (28) of the process light of a melt pool (46), produced by the laser beam (12) impinging on the workpiece (16) to be processed, at the joint (42) at regular time intervals, and
- a processing unit (40) with a memory (58) for receiving the recorded image data from the camera (24), which is designed
-- to determine, by image processing of the received image data, the intersection point (50) of the light line (38) with the location (48) to be joined,
-- to store the intersection points (50) between light line (38) and location (48) to be joined as target trajectory (60) in the memory (58), and
-- to determine a minimum distance between the stored target trajectory (60) and the current melt pool midpoint,
**characterized in that** the processing unit (40) is configured to determine the midpoint of the melt pool (46) at the joint (42) by image processing.

2. The laser processing head (10) as claimed in claim 1, **characterized in that** the optical bandpass filter (28) is an interference filter, in particular a Fabry-Perot filter.

3. The laser processing head (10) as claimed in claim 1 or 2, **characterized in that** the optical bandpass filter (28) has a wavelength passband whose full width at half maximum is preferably less than 50 nm, with particular preference less than 20 nm, and less than 10 nm in particular.

4. The laser processing head (10) as claimed in one of the preceding claims, further comprising:
- a comparator (64) which is designed to output an error report upon overshooting of the minimum distance between target trajectory (60) and current welding midpoint beyond a prescribed distance value.

5. The laser processing head (10) as claimed in one of the preceding claims, further comprising:
- an actuator (41) which is designed to control the minimum distance between target trajectory (60) and current welding midpoint to zero by moving the laser beam (12) transverse to a movement direction of the laser processing head (10) by a controlling distance (a).

6. The laser processing head (10) as claimed in claim 5, **characterized in that** the actuator (41) is designed to move the laser beam (12) perpendicular to the movement direction by the controlling distance (a).

7. The laser processing head (10) as claimed in one of the preceding claims, **characterized in that** the camera (24) comprises an image recording device that is designed to process the image data by means of an HDR method.

8. The laser processing head (10) as claimed in one of the preceding claims, further comprising a beam splitter (20) that can be used to couple an observation beam path (22) of the camera (24) coaxially into the laser beam path.

9. The laser processing head (10) as claimed in one of the preceding claims, **characterized in that** the light cutting device (30) is designed to generate by means of the light source (34) a light fan (36) that strikes the workpiece (16) to be processed obliquely relative to the optical axis (L) of the laser beam (12) so that a light line (38) is generated on the workpiece (16), and it is possible to determine a distance between the focusing optics (18) and the workpiece (16) by means of triangulation.

10. The laser processing head (10) as claimed in claim 9, **characterized in that** the light line (38) projected onto the workpiece (16) is straight and runs perpendicular to the movement direction of the laser processing head (10).

11. The laser processing head (10) as claimed in claim 9, **characterized in that** the light line (38) projected onto the workpiece (16) runs circularly around the point of impingement of the laser beam (12) on the workpiece (16).

12. The laser processing head (10) as claimed in one of the preceding claims, **characterized in that** the light source (34) is a laser, in particular a semiconductor laser.

13. A robot device with a laser processing head (10) as claimed in one of the preceding claims, which is designed to move the laser processing head (10) so that the weld midpoint is guided along the target trajectory (60), the current movement direction of the laser beam (12) striking the workpiece (16) being set so that said movement direction points away from the current weld midpoint tangentially relative to the target trajectory (60).

14. A method for processing a workpiece (16) by means of a laser processing head (10) as claimed in one of the preceding claims by using a laser beam (12), having the steps of:
- generating on the workpiece (16) a light line (38) that cuts a location (48) to be joined at a predetermined distance (d) in front of a joint (42),
- imaging the light line (38) at the location (48) to be joined as well as a melt pool (46), produced by the laser beam (12) impinging on the workpiece (16), at the joint (42) at regular time intervals by means of the camera (24), and
- processing the image data produced by the camera (24), having the steps of
-- determining an intersection point (50) of the light line (38) with the location (48) to be joined, as well as the midpoint of the melt pool (46),
-- storing the intersection points (50) determined at different instants as target trajectory (60) in a memory (58), and
-- determining a minimum distance between target trajectory (60) and current melt pool midpoint.

15. A method as claimed in claim 14, further having the step of controlling the minimum distance between target trajectory (60) and current melt pool midpoint by moving the laser beam (12) transverse to the movement direction of the laser beam (12) to zero by a controlling distance (a).

## Revendications

1. Tête de traitement au laser (10) pour le traitement d'une pièce usinée (16) au moyen d'un rayon laser (12), comportant :
- un boîtier (14) dans lequel passe un parcours de rayon pour le rayon laser (12) et qui présente une optique de focalisation (18) pour focaliser le rayon laser (12) sur un point de jonction (42) de la pièce usinée à traiter (16),
- un dispositif de découpe au laser (30) installé sur le boîtier (14) et comportant une source lumineuse (14) pour générer sur la pièce usinée (16) une ligne lumineuse (38) qui coupe un point à joindre (48) à une distance prédéfinie (d) du point de jonction (42),
- une caméra (24) comportant un filtre passe-bande optique (28) disposé dans un parcours de rayon d'observation (22) en amont de la caméra (24), la source lumineuse (34) présentant un maximum de rayonnement du moins local dans la plage de passage de longueur d'onde du filtre passe-bande (28) et le filtre passe-bande optique (28) étant conçu de manière à ce que le rayon laser (12) ne soit pas transmis, la caméra (24) restituant la ligne lumineuse (38) au point à joindre (48) et la partie passée à travers le filtre passe-bande (28) de la lumière de traitement d'un bain de soudage (46) généré par incidence du rayon laser (12) sur la pièce usinée à traiter (16) au point de jonction (42) à une périodicité régulière, et
- une unité de traitement (40) comportant une mémoire (58) pour recevoir les données d'image reçues de la caméra (24) et qui est conçue pour
-- déterminer, par traitement d'image des données d'image reçues, le point de croisement (50) de la ligne lumineuse (38) avec le point à joindre (48),
-- enregistrer les points de croisement (50) entre la ligne lumineuse (38) et le point à joindre (48) sous forme de trajectoire de destination (60) dans la mémoire (58) et
**caractérisée en ce que** l'unité de traitement est conçue pour déterminer par traitement d'image le point central du bain de soudage (46) au point de jonction (42) et déterminer une distance minimale entre la trajectoire de destination (60) enregistrée et le point central actuel du bain de soudage.

2. Tête de traitement au laser (10) selon la revendication 1, **caractérisée en ce que** le filtre passe-bande optique (28) est un filtre interférentiel, en particulier un filtre Fabry-Perot.

3. Tête de traitement au laser (10) selon la revendication 1 ou 2, **caractérisée en ce que** le filtre passe-bande optique (28) présente une plage de passage de longueur d'onde dont l'amplitude de demi-valeur est de préférence inférieure à 50 nm, très préférentiellement inférieure à 20 nm et en particulier inférieure à 10 nm.

4. Tête de traitement au laser (10) selon une des revendications précédentes, comprenant en outre :
- un comparateur (64) qui est conçu pour éditer un message d'erreur, en cas de dépassement de la distance minimale entre la trajectoire de destination (60) et le point central de soudage actuel sur une valeur de distance prédéfinie.

5. Tête de traitement au laser (10) selon une des revendications précédentes, comprenant en outre :
- un actionneur (41) qui est conçu pour régler vers zéro la distance minimale entre la trajectoire de destination (60) et le point central de soudage actuel en déplaçant le rayon laser (12) transversalement par rapport à un sens de mouvement de la tête de traitement au laser (10) à raison d'une distance de réglage (a).

6. Tête de traitement au laser (10) selon la revendication 5, **caractérisée en ce que** l'actionneur (41) est conçu pour déplacer le rayon laser (12) perpendiculairement au sens de mouvement à raison de la distance de réglage (a).

7. Tête de traitement au laser (10) selon une des revendications précédentes, **caractérisée en ce que** la caméra (24) comprend un dispositif de prise de photos qui est conçu pour traiter les données d'image au moyen d'un procédé HDR.

8. Tête de traitement au laser (10) selon une des revendications précédentes, comprenant en outre un diviseur de rayons (20) grâce auquel un parcours de rayon d'observation (22) de la caméra (24) peut être intégré coaxialement dans le parcours de rayon laser.

9. Tête de traitement au laser (10) selon une des revendications précédentes, **caractérisée en ce que** le dispositif de coupe au laser (30) est conçu pour générer au moyen de la source lumineuse (34) un éventail lumineux (36) qui tombe à l'oblique de l'axe optique (L) du rayon laser (12) sur la pièce usinée à traiter (16), de sorte qu'une ligne lumineuse (38) est générée sur la pièce usinée (16) et qu'une distance entre l'optique de focalisation (18) et la pièce usinée (16) peut être déterminée par triangulation.

10. Tête de traitement au laser (10) selon la revendication 9, **caractérisée en ce que** la ligne lumineuse (38) projetée sur la pièce usinée (16) est droite et s'étend perpendiculairement au sens de mouvement de la tête de traitement au laser (10).

11. Tête de traitement au laser (10) selon la revendication 9, **caractérisée en ce que** la ligne lumineuse (38) projetée sur la pièce usinée (16) s'étend circulairement autour du point d'incidence (12) sur la pièce usinée (16).

12. Tête de traitement au laser (10) selon une des revendications précédentes, **caractérisée en ce que** la source lumineuse (34) est un laser, en particulier un laser à semi-conducteur.

13. Dispositif robotique comportant une tête de traitement au laser (10) selon une des revendications précédentes, qui est conçue pour déplacer la tête de traitement au laser (10) de manière à ce que le point central de soudage passe le long de la trajectoire de destination (60), le sens de mouvement actuel du rayon laser (12) incident sur la pièce usinée (16) étant réglé de manière à ce qu'il soit détourné tangentiellement par rapport à la trajectoire de destination (60) du point central de soudage actuel.

14. Procédé de traitement au laser (10) d'une pièce usinée (16) au moyen d'une tête de traitement au laser (10) selon une des revendications précédentes à l'aide d'un rayon laser (12), comportant les étapes suivantes :
- génération sur la pièce usinée (16) d'une ligne lumineuse (38) qui coupe un joint à joindre (48) à une distance prédéfinie (d) d'un point de jonction (42),
- restitution de la ligne lumineuse (38) au point à joindre (48) et d'un bain de soudage (46) généré par incidence du rayon laser (12) sur la pièce usinée (16) au point de jonction (42) à une périodicité régulière au moyen de la caméra (24),
- traitement des données d'image générées par la caméra (24) par les étapes suivantes :
-- définition d'un point de croisement (50) entre la ligne lumineuse (38) et le point à joindre (48), de même que du point central du bain de soudage (46),
-- enregistrement des points de croisement (50) enregistrés à différents moments sous forme de trajectoire de destination (60) dans une mémoire (58) et
-- détermination d'une distance minimale entre la trajectoire de destination (60) et le point central actuel du bain de soudage.

15. Procédé selon la revendication 14, comprenant en outre l'étape de réglage de la distance minimale entre la trajectoire de destination (60) et le point central actuel du bain de soudage en déplaçant vers zéro le rayon laser (12) transversalement par rapport au sens de mouvement du rayon laser (12) à raison d'une distance de réglage (a).
